# EUROPEAN PATENT APPLICATION

(11) **EP 4 847 907 A1**
(43) Date of publication of application: **02.12.2026**
(21) Application number: 25382533.5
(22) Date of filing: 27.05.2025
(51) Int. Cl.: G01N 21/45, G01N 21/77, G01B 9/02, G01B 9/02015, B01L 3/00, G01N 21/84, G01N 21/03

(54) **A POINT-OF-CARE DETECTION DEVICE FOR QUANTITATIVE TARGET ANALYTE IDENTIFICATION**

(71) Applicant: Fundació Institut Català de Nanociència i Nanotecnologia (ICN2), 08193 Cerdanyola del Vallès (Barcelona) (ES); Consejo Superior de Investigaciones Científicas (CSIC), 28006 Madrid (ES)
(72) Inventor: SOLER AZNAR, Maria, E-08310 Argentona, Barcelona (ES); LECHUGA GÓMEZ, Laura, E-08173 San Cugat del Vallès, Barcelona (ES); ESTÉVEZ ALBEROLA, Mª Carmen, E-08025 Barcelona (ES); RAMÍREZ PRIEGO, Patricia, E-08730 Santa Margarida i els Monjos, Barcelona (ES); ALONSO FERNÁNDEZ, Andrés, E-08024 Barcelona (ES)
(74) Representative: ABG Intellectual Property Law, S.L.

(57) **Abstract**

The invention is directed at a point-of-care detection device (10), comprising a cartridge (1) and housing (2) with a cartridge receiving port (2.1), the device (10) based on a photonic chip (1.4) with bimodal waveguide interferometers, that integrates multiplexed interferometric waveguide sensors with microfluidic technology for real-time, label-free detection of biological and chemical analytes. The invention also comprises a method for quantitative analyte identification in a sample by using said device.

## Description

### FIELD OF THE INVENTION

This invention presents a point-of-care detection device that integrates multiplexed interferometric waveguide sensors with microfluidic technology for real-time, label-free detection of biological and chemical analytes. It leverages advances in photonic integrated circuits, microfluidics and photodetection systems to detect multiple analytes simultaneously from minute amounts of biological or human samples, with high sensitivity and speed, and without the need for labels or secondary markers.

### BACKGROUND

The core principle of a waveguide is to confine light within its high refractive index core through total internal reflection (TIR) at the interface between the core and the surrounding lower refractive index cladding (which includes the sample environment in the sensing region). However, the electromagnetic field of the guided light doesn't abruptly drop to zero at the core-cladding interface. Instead, a portion of the field extends exponentially decaying into the cladding region. This non-propagating field is called the evanescent field.

This evanescent field is crucial for sensing because it interacts with the medium immediately adjacent to the waveguide surface, where the sample containing the analyte is introduced. When target analyte molecules bind to the surface of the waveguide (often functionalized with specific bioreceptors), they cause a change in the local refractive index in the vicinity of the waveguide surface.

Interferometric waveguide sensors have emerged as powerful tools for label-free detection, capitalizing on their inherent sensitivity to refractive index changes induced by analyte binding within the evanescent field of the waveguide. Early work by Lechuga et al. (patent publication number No. EP2017602B1) laid crucial groundwork in the implementation of bimodal waveguide interferometers, a foundational technique for evanescent field sensing that underpins the present invention's sensing mechanism. The potential of photonic lab-on-chip interferometric biosensors for multiplexed detection with high sensitivity has been further highlighted in recent reviews (González-Guerrero et al., DOI: 10.1039/C6AY02972H), underscoring the growing need for such integrated analytical platforms.

While the concept of multiplexed interferometric biosensors has been explored (e.g., Venkatarayalu, patent application No. EP4389281A2), existing approaches often lack a strong emphasis on compact, highly portable designs tailored for point-of-care testing (POCT) or field applications. Moreover, alternative sensing modalities, such as evanescent fluorescence-based cartridge systems (Moll, patent publication number No. US9212995B2), rely on labelling steps, which can complicate workflows and potentially introduce artifacts, contrasting with the label-free nature of the present invention.

Notably, while other multiplexed label-free evanescent sensing devices exist (Sánchez Ramírez, patent application WO2024105300A1), the present invention distinguishes itself through its unique optical architecture and integration with a specialized photodiode array, enabling a highly compact and portable form factor without compromising multiplexing capability.

In view of the foregoing, there is a growing and urgent need in the state-of-the-art for rapid, highly sensitive, and label-free testing in point-of-care situations to enable accurate detection of biological and chemical analytes. This is a pressing need for many fields such as healthcare, environmental control, food production, industrial processes and security. In healthcare, there is a particular need for point-of-care (POC) devices to rapidly detect infectious and non-infectious pathogens and biomarkers to aid a patient's diagnosis and treatment decisions in a short time interval.

Such a diagnostic capability can significantly improve patient outcomes by facilitating quick medical decisions in a range of healthcare contexts. The core requirements of such a sensor device include:
1. High Sensitivity and Specificity: Capable of detecting very low concentrations of diverse analytes, the sensor system must be able to detect biomarkers and pathogens at low picomolar levels with the required specificity and in a quantitative manner.
2. Rapid Detection: Results must be generated in under 15 minutes to support timely medical interventions.
3. Multiplexed Detection: The device should enable simultaneous detection of multiple biomarkers from a single sample, saving time and resources. The simultaneous evaluation of up to eight analytes could be ideal, with the possibility to extend to more depending on detector availability and cartridge design.
4. Low Sample Volume: Designed to operate with minute sample volumes, the system requires less than 150 µL of biological fluids (e.g., whole blood, serum, plasma, sputum, urine, cerebrospinal fluid).
5. Broad Application Spectrum: Usable in a wide range of diagnostics scenarios, including sepsis detection, sexually transmitted disease diagnosis, antimicrobial resistance testing, inflammatory marker identification, and allergy assessment. Moreover, the technology can be extended to other fields as environmental monitoring or food control, among others.

The invention provides a point-of-care detection device fulfilling these requirements.

### DESCRIPTION OF THE INVENTION

The invention provides a multiplexed point-of-care device using interferometric waveguide sensors for rapid and quantitative analyte identification. This invention introduces a compact, multiplexed point-of-care detection device for simultaneous detection of multiple biomarkers with high sensitivity and specificity, offering a significant improvement in point-of-care diagnostics. By integrating a photonic waveguide array with microfluidic sample delivery and real-time photonic detection, this device represents a highly efficient, sensitive, and adaptable solution for multiplexed rapid diagnostics, for example in clinical and remote healthcare settings. The device of the invention has proved a limit of detection (LOD) on the order of 10⁻⁷ RIU making it highly sensitive and suitable for a wide range of sensing applications.

In the scope of the present invention, real-time would be understood as results within a few minutes, such as 1-15 minutes of sample introduction in the device.

In this way, the present invention provides a point-of-care detection device according to claim 1, and a method for quantitative identification of an analyte in a sample according to claim 15.

In a first inventive aspect, the invention provides a *point-of-care detection device for quantitative target analyte identification in a sample, the sample comprising at least one analyte, the device comprising:*
*a) a cartridge comprising:*
   - *a photonic chip comprising a waveguide array having a plurality of waveguides, the plurality of waveguides comprising a plurality of output waveguides, wherein the surface of at least one of the output waveguides comprises a functionalized sensing region for a selective binding of the analyte; each waveguide being configured to support propagation of at least two light modes of a same polarization and wavelength, each light mode differently affected by analyte binding via interaction with a respective evanescent field;*
   - *a sample reservoir adapted to contain the sample;*
   - *a microfluidic interface in fluid communication with the photonic chip and configured to route the sample from the sample reservoir to the functionalized sensing region of the waveguide; the microfluidic interface comprising one or more microfluidic microchannels;*
*b) a housing comprising:*
   - *a cartridge receiving port configured to receive the cartridge;*
   - *an illumination source configured to couple a coherent input light into the waveguides of the photonic chip when the cartridge is received in the cartridge receiving port;*
   - *a detection module comprising a plurality of detection elements optically coupled with the plurality of output waveguides of the photonic chip and wherein the detection module is configured to measure changes in interference patterns generated by the light modes propagating through the waveguide array, said interference patterns being representative of the concentration of the analyte in the sample; and*
   - *a processing unit communicably coupled to the detection module, configured to analyze the interference patterns measured by the detection module and to provide a quantitative output related to the presence and*/*or concentration of the analyte.*

In the scope of this invention, functionalization would be construed as the process of modifying the sensor's surface with specific molecules to enable it to selectively bind to a target molecule. In this invention, at least the surface of the waveguides of the photonic chip may be modified to detect a specific analyte. Only the target analyte will bind to the functionalized surface (also referred to throughout the description as "functionalized sensing regions") of the waveguide, while other molecules in the sample will not (or will bind minimally). This specificity is essential for biosensing applications, where the goal is to detect the presence and concentration of a particular analyte in a sample. The functionalized sensing regions work as sensors for measuring analyte concentration. The one or more functionalized sensing regions of the photonic chip define the so-called sensing window.

In an embodiment, the illumination source is polarized in transverse electric (TE) mode. Advantageously, TE mode offers a stronger and more extended evanescent field into the upper cladding region (where the analyte is typically present) compared to the Transverse Magnetic (TM) mode. This stronger evanescent field leads to a greater overlap between the optical field and the analyte molecules binding to the waveguide surface. A larger overlap translates to a more significant change in the effective refractive index of the guided mode upon analyte binding, resulting in higher sensitivity.

In a preferred embodiment, only two light modes are propagated in each waveguide. In a more preferred embodiment, the two light modes are TE₀₀ and TE₁₀.

In an embodiment, the surface of each of the output waveguides comprises a functionalized sensing region. In alternative embodiments, at least one of the output waveguides is devoid of the functionalized sensing region.

In some embodiments, the cartridge is consumable or single-use disposable, i.e. a new cartridge is required for each sample tested.

In alternative embodiments, the cartridge is recyclable, for instance, via return to the manufacturer or intermediary for cleaning and preparation for reuse.

The housing of the invention is external to the cartridge. In some embodiments, the housing further comprises a pumping means. In other embodiments, the pumping means is external to the housing and the cartridge.

In an embodiment, *the illumination source is configured to operate in the visible to near IR range; and*/*or wherein device comprises an optical arrangement to configured to polarize light from the illumination source in the transverse electric (TE) mode for impingement onto the functionalized sensing region.*

In an embodiment, the illumination source is selected from one of the following: diode laser, gas laser, solid-state laser such as a ruby or Nd:YAG laser, a fiber laser.

In an embodiment, *the detection module comprises detection optics being selected from the group comprising a 2D photodiode array, a CMOS camera or a CCD camera; and wherein the detection module is configured to detect the at least two light modes propagating through at least one waveguide of the waveguide array.*

In an embodiment, *the detection optics comprises a plurality of detection elements being optically aligned with a respective output waveguide of a waveguide; and wherein each detection element comprises upper and lower sections and wherein dummy detection elements are disposed between adjacent detection elements.*

Advantageously, dummy detection elements reduce crosstalk between adjacent detection elements.

In an embodiment:
- *the plurality of detection elements comprises eight detection elements arranged at 200-250 µm intervals, each aligned with a respective output waveguide; and*
- *wherein the dummy detection elements comprise silicon photodiodes.*

In an embodiment, the detection electronics comprises:
- a low-noise amplifier configured to amplify an analogic signal outputted by the detection optics (either the photodetector array, the CMOS camera or the CCD camera) to obtain an amplified analogic signal,
- an analogic to digital converter configured to digitize the amplified analogic signal into a digital signal,
- optionally, a filtering means configured to filter the digital signal before analysing it with the processing unit.

In an embodiment, *the housing further comprises a pumping means configured to deliver the sample from the sample reservoir to the functionalized sensing regions through the microfluidic interface; and*
*wherein the processing unit comprises a microfluidic controller configured to govern the pumping means for regulating at least the flow rate of the sample towards the functionalized sensing regions of the waveguide; and*
*wherein the microfluidic controller is configured to regulate the flow rate of the sample delivered to the functionalized sensing regions of the waveguide.*

For instance, passive capillary structures (e.g. pillars, gaps) can be implemented to maintain a determined flow rate. Also, active pumping by using a pump (like a peristaltic pump or a pressure-driven pump).

In an embodiment, the pumping means comprises a pressure-driven pump with a flow sensor feedback loop configured to maintain a flow rate of 2-40 µL/min ± 5% during sample delivery.

In an embodiment, *the housing of the device comprises:*
- *a wireless communication module configured to perform a data transfer with an external device;*
- *a laser controller configured to manage the activation and intensity of the illumination source;*
- *a user interface with a display, preferably a touchscreen;*
- *a battery configured to feed the illumination source, a temperature controller and*/*or the processing unit; and*/*or*
- *data storage means configured to register the quantitative output of the processing unit.*

In an embodiment, *the waveguide array is configured as a tree-like branching network that comprises:*
*i) an input waveguide configured to be optically coupled to the illumination source, the input waveguide being configured to receive the initial coherent and polarized light beam;*
*ii) a plurality of branching waveguides optically coupled with the input waveguide, wherein the branching waveguides are configured to divide the initial coherent and polarized light beam into a plurality of distinct coherent and polarized light beams; and wherein the plurality of branching waveguides is arranged in successive splitting stages, each stage dividing light from a parent waveguide into two or more daughter waveguides, thereby generating the plurality of distinct coherent and polarized light beams;*
*iii) a plurality of output waveguides, wherein at least one of the output waveguides comprises a functionalized sensing region configured to interact with an analyte; wherein the output waveguides are optically coupled to the branching waveguides and to the detection module; wherein the functionalized sensing region modifies the coherent and polarized light beam propagating through it by inducing a differential phase shift between the two light modes via interaction of the analyte with the evanescent field of the modes.*

In the scope of this invention, "output waveguides" or "sensing waveguides" are optical waveguide structures integrated on the photonic chip, each comprising at least one functionalized sensing region along their surface. These waveguides are configured to receive light-typically split from an input waveguide via a branching configuration such as a Y-branch, T-branch, or multimode interference splitter-and to support the propagation of one or more optical modes. The functionalized sensing region of each output waveguide enables selective interaction with target analytes in a sample, such that binding events at the waveguide surface induce a change in the effective refractive index of the guided mode(s). This, in turn, produces a measurable change in the optical signal (e.g., phase, intensity, or interference pattern) at the output of each waveguide, which is indicative of the presence and/or concentration of the analyte. The output waveguides are optically coupled with the detection module.

In some embodiments of the waveguide array configured as a tree-like branching network, each of the output waveguides comprises a functionalized sensing region. Advantageously, this configuration enables differential measurements of the target analyte(s). In other words, instead of having a dedicated, non-functionalized reference output waveguide, the comparison can be made between different functionalized waveguides within the same array.

In alternative embodiments of the waveguide array configured as a tree-like branching network, at least one of the output waveguides is devoid of a functionalized sensing region. In such embodiment, the at least one output waveguide lacking the functionalized sensing region serves as a reference sensor for calibration purposes.

In an embodiment, each waveguide of the waveguide array is a bimodal waveguide or a waveguide in a Mach-Zehnder interferometer configuration. Other types of waveguides are also possible for the interferometric configurations of the device (for instance, slot waveguides, subwavelength waveguides, strip waveguides, etc.). These waveguide configurations are widely described in the literature, see for instance "Review on Optical Waveguides", Shankar Kumar Selvaraja and Purnima Sethi, DOI: 10.5772/intechopen.77150.

In an embodiment, the housing further comprises an optical arrangement to couple the light from the illumination source to the photonic chip; preferably wherein the optical arrangement comprises a collimator, a polarizer, an isolator and an objective lens.

In the embodiment of the device having functionalized regions based on a bimodal waveguide, the fundamental and the first-order TE modes may be excited. These two modes have different spatial distributions and thus their evanescent fields interact differently with the analyte binding event on the waveguide surface, leading to a differential phase shift and a change in the interference pattern.

Alternatively, in the device embodiments wherein the functionalized sensing regions are based on a Mach-Zehnder interferometer, the input light is split into two arms. One arm serves as a reference, while the other is exposed to the analyte. The evanescent field in the sensing arm interacts with the analyte, causing a phase shift relative to the reference arm. When the light from both arms is recombined, the resulting interference pattern (intensity) changes with the analyte concentration. In this case, the evanescent field that reaches out from the confines of the waveguide core interacts with the surrounding sample. Changes in the refractive index caused by analyte binding in this evanescent field region directly modulate the phase of the guided light, which is then detected through interferometry to determine the analyte concentration.

In an embodiment, *the waveguides have a core and a cladding, wherein:*
- *the refractive index of the core of the waveguides is in the range 2 to 3;*
- *the refractive index of the cladding of the waveguides is in the range 1.4 to 1.6.*

In an embodiment, the waveguides are formed from a material selected from the group consisting of: silicon, silicon nitride, silica, lithium niobate, indium phosphide, polymers, epoxy resins, semiconductors such as GaAs or AlGaAs.

To enlarge the amplitude of the evanescent field, the mismatch between the refractive index of the core and the cladding of the waveguide must be high, i.e. preferably a mismatch above 0.5. In an embodiment, the waveguide core is made of SiN (refractive index of 2.00) and the waveguide cladding is made of SiO₂ (refractive index of 1.46), thereby having a mismatch of 0.54.

In an embodiment, *at least one of the waveguides is a bimodal waveguide comprising:*
- *a single-mode section configured to propagate only a fundamental traverse electric mode (TE₀₀);*
- *a bimodal section downstream of the single-mode section, configured to support simultaneous propagation of the fundamental traverse electric mode (TE₀₀) and first-order traverse electric mode (TE₁₀),*
- *a step junction separating the single-mode section and the bimodal section; and*
*wherein the bimodal section has* a *sensing window with a length of 5-15 mm and* a *width of 2-5 µm*.

Advantageously, having a sensing window of those dimensions maximizes the optical path where the evanescent field overlaps with the analytes.

In an embodiment, *the waveguides have a height in the range of 1-3 nm and* a *width of 0.5-2.5 µm.* In this embodiment, this configuration defines a nanometric rib.

In an embodiment, the core thickness of the waveguide is different in the single-mode section compared to the bimodal section. In preferred embodiments, the core thickness in the single-mode section is lower than the core thickness in the bimodal section. In a preferred embodiment, the core thickness of the waveguide in the single-mode section is 150 nm and the core thickness of the waveguide in the bimodal section is 340 nm.

In an embodiment, the step junction comprises a nanometric rib with a height in the range 1-3 nm. Advantageously, this configuration eases the propagation of only two light modes. Also, the nanometric rib improves the sensitivity of the point-of-care device.

In an embodiment, *the waveguides have a core, the core of the waveguides is made of Si₃N₄, and the cladding of the waveguides is made of SiO₂; wherein the thickness of the core of the waveguides is between 150-400 nm, and the thickness of the cladding of the waveguides is between 1-2 µm*.

*The step junction has an increase from 150 nm to 350 nm.* Advantageously, these embodiments are designed to excite the first-order mode and the fundamental mode after the step junction and having a high efficiency.

In an embodiment, *the microfluidic interface is made of a biocompatible material comprising one or more of the following: PDMS, PMMA, PC, and*/*or COC.*

In an embodiment, *the microfluidic interface comprises microchannels with: a width of 50-200 µm, preferably 100-150 µm; a height of 50-150 µm, preferably 80-100 µm; a spacing of 50-250 µm between adjacent microchannels.*

In an embodiment, the volume of the sample reservoir is lower than or equal to 250 µL.

In an embodiment, the sample reservoir is pre-filled with reagents required for the analysis.

In an embodiment, the cartridge is sealed to prevent leakage of the sample.

In an embodiment, the cartridge and the cartridge receiving port comprise complementary alignment features for precisely positioning the cartridge within the cartridge receiving port, whereby the complementary alignment features are selected from the group comprising: grooves and ridges, pins and holes, keyways and slots, or magnetic couplings.

In an embodiment, *the microfluidic interface comprises:*
- *A multi-channel configuration with a plurality of independent microchannels, preferably 4-8 microchannels, each microchannel being aligned with a functionalized sensing region for multiplexed analyte detection; or*
- *A single microchannel adapted to deliver the sample collectively to all functionalized sensing regions.*

In an embodiment, the functionalized sensing regions comprise a coating with one or more of the following: antibodies, nanobodies, aptamers, oligonucleotides, peptides, protein derivatives, biological receptors, Metal-Organic Frameworks (MOFs), Metal-Organic Polyhedra (MOPs), Covalent-Organic Frameworks (COF).

In an embodiment, the photonic chip comprises interferometric waveguides and operates by the interference of two modes of the light of the same polarization and wavelength, propagating along the waveguide.

This change in the refractive index in the region of the evanescent field directly affects the properties of the guided light. The effective refractive index experienced by the propagating modes within the waveguide changes. In an embodiment of the claimed device, the configuration is such that the two supported modes of light within the waveguide are affected differently by this change in the surrounding refractive index due to analyte binding. One mode experiences a larger change in its propagation constant than the other.

The two modes, having experienced different phase shifts due to the differential interaction with the bound analyte (via the evanescent field), are then allowed to interfere.

This interference results in a change in the output intensity of the light. The magnitude of this intensity change is directly related to the amount of analyte bound to the waveguide surface, and thus, the concentration of the analyte in the sample.

In a second inventive aspect, the invention comprises a *method for quantitative identification* of *an analyte in a sample, the method comprising the following steps:*
*a) providing a point-of-care detection device according to the first inventive aspect; wherein selective binding of the analyte to the functionalized sensing region has taken place;*
*b) introducing a sample into the sample reservoir of the cartridge and the cartridge into the receiving port;*
*c) routing the sample, via the microfluidic interface, to the functionalized sensing region of the waveguides;*
*d) illuminating the waveguides with light from the illumination source, such that at least two light modes of a same polarization and wavelength propagate through each waveguide;*
*e) measuring, by means of the detection module, changes in interference patterns generated by the light modes propagating through the waveguide array, the changes being indicative of the presence and*/*or concentration of the analyte in the sample; and*
*f) analysing, with the processing unit, the measured interference patterns to provide a quantitative output related to the presence and*/*or concentration of the analyte in the sample.*

In an embodiment, the method further comprises: step a) is performed with a point-of-care detection device with bimodal waveguides and wherein each bimodal waveguide comprises a single-mode section, a bimodal section and a step junction; and in step d), the at least two light modes are propagated through the bimodal section of each waveguide.

In an embodiment, the method further comprises calibrating the device using reference samples with known refractive indices to generate a phase shift vs. concentration calibration curve stored in the processing unit.

In an embodiment:
- step e) comprises measuring intensities Iᵤₚ and I_{down} from upper and lower sections of each detection element in the detection module; and
- step f) of the method comprises analyzing the interference patterns by measuring a normalized signal difference computed as
${S}_{R} = \frac{{I}_{up} - {I}_{down}}{{I}_{up} + {I}_{down}} ,$ wherein S_{R} correlates with a phase shift induced by analyte binding at the functionalized sensing regions, and wherein said phase shift is proportional to the analyte concentration in the sample.

### Applications and use cases of the invention

The device supports diverse applications in point-of-care settings, including:
- Sepsis Detection: Early identification of sepsis biomarkers from human blood or serum.
- STD Screening: Rapid screening for sexually transmitted diseases (STD) using a minimal sample (i.e.: human urine).
- Antimicrobial Resistance Testing: Detection of pathogen markers indicating resistance to specific antibiotics.
- Inflammation and Allergy Detection: Quantification of inflammation-related biomarkers (e.g., C-reactive protein) and allergens.
- Virus detection: identification and quantification of virus particles (e.g.: coronavirus) and/or its genetic targets.

All features described in this specification, including the claims, description and drawings, can be combined in any way except for combinations of mutually exclusive features.

### DESCRIPTION OF THE DRAWINGS

To complement this description and with the aim of helping a better understanding of the characteristics of the invention, in accordance with specific embodiments, the following figures are attached as an integral part of said description where, for illustrative purposes and not limiting, the following has been represented:
- Figure 1: This figure shows an embodiment of the cartridge of the point-of-care detection device according to the present invention.
- Figure 2: This figure shows an embodiment of the housing of the point-of-care detection device according to the present invention.
- Figure 3: Block diagram of an embodiment of the point-of-care detection device according to the present invention.
- Figure 4: Embodiment of the photonic chip layout with waveguides demonstrating how light is split for multiplexed sensing in an embodiment of the point-of-care detection device according to the present invention.
- Figure 5: Example of the optical arrangement that can be used to illuminate the photonic chip.
- Figure 6: Schematic of a 2D photodiode array suitable for the detection optics of an embodiment of the point-of-care detection device according to the present invention.
- Figure 7: Embodiment of the photonic chip of an embodiment of the point-of-care detection device according to the present invention.
- Figure 8: This figure illustrates the evanescent field sensing principle applied in the present invention.
- Figure 9: This figure shows an overview of the bimodal waveguide sensor in
- Figure 10: which some embodiments of the photonic chip are based. This figure shows details of the detection module according to an embodiment of the point-of-care detection device according to the present invention.
- Figure 11: This figure shows views of an embodiment of the microfluidic interface having a plurality of microchannels.
- Figure 12: This figure shows an embodiment of the microfluidic interface having a single microchannel configuration.
- Figure 13: This figure shows real-time sensorgrams with the microfluidics configuration of Figure 11.
- Figure 14: This figure shows real-time sensorgrams with the microfluidics configuration of Figure 12.
- Figure 15: Calibration curves for an embodiment of the photonic chip.
- Figure 16: This figure shows real-time sensorgrams demonstrating the limit of detection of an embodiment of the point-of-care detection device according to the present invention.

### DETAILED DESCRIPTION OF THE INVENTION

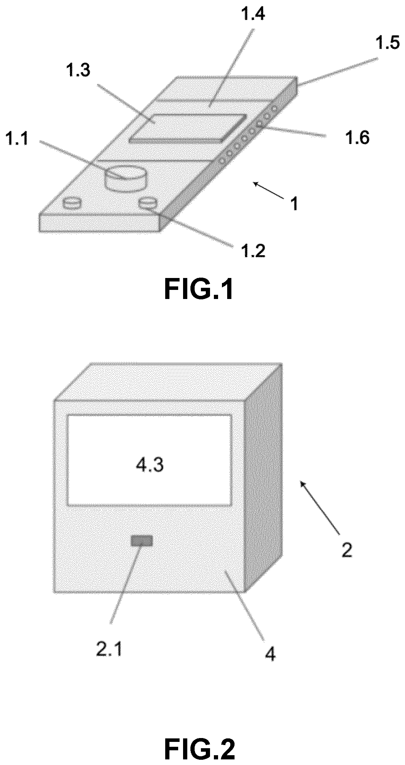

Figure 1 shows an embodiment of the cartridge (1) for the system (10) according to the present invention. The cartridge (1) comprises a sample reservoir (1.1) adapted to store a sample, a microfluidic interface (1.2) comprising microfluidic input-output (IO) ports and microfluidic microchannels, a sensing window (1.3) comprising one or more functionalized sensing regions (1.3.1), a photonic chip (1.4), a casing (1.5) and photonic input-output (IO) ports (1.6).

### Details of the cartridge (1)

The cartridge (1) comprises a photonic chip (1.4) with a series of waveguides (1.7) and microfluidic microchannels for sample handling. The cartridge (1) comprises input and output photonic ports (1.6.1, 1.6.2) to allow coupling of light on and off the photonic chip (1.4), as well as a microfluidic interface (1.2) for putting in fluid communication a sample reservoir (1.1) and the functionalized sensing regions (1.3.1). The cartridge (1) comprises the sample reservoir (1.1) that is adapted to store a small volume (i.e. typically < 150 µL) of the sample for analysis.

In some embodiments, the microfluidic interface (1.2) comprises one or more microfluidic microchannels within the cartridge (1) which put in fluidic communication the sample reservoir (1.1), and the functionalized sensing regions (1.3.1) of the surface(s) of the waveguides (1.7) of the photonic chip (1.4).

### Details of the housing (2):

Figure 2 shows an embodiment of the housing (2) according to the claimed point-of-care detection device (10). This housing (2) comprises a cartridge measurement port (2.1) and a processing unit (4), which in turn comprises a screen (4.5) and user interface (4.3).

The cartridge (1) comprises an insertion mechanism designed for user-friendly loading into the housing (2), where it aligns precisely with the device's optical and fluidic interfaces.

In a preferred embodiment, the cartridge (1) and the housing (2) comprise complementary alignment features for precisely positioning the cartridge (1) within the housing (2), whereby the complementary alignment features are selected from the group comprising: grooves and ridges, pins and holes, keyways and slots, or magnetic couplings. In an embodiment, said complementary alignment features are included in a cartridge measurement port (2.1) of the housing (2), specifically designed for the insertion of the cartridge (1).

### General overview of the device (10)

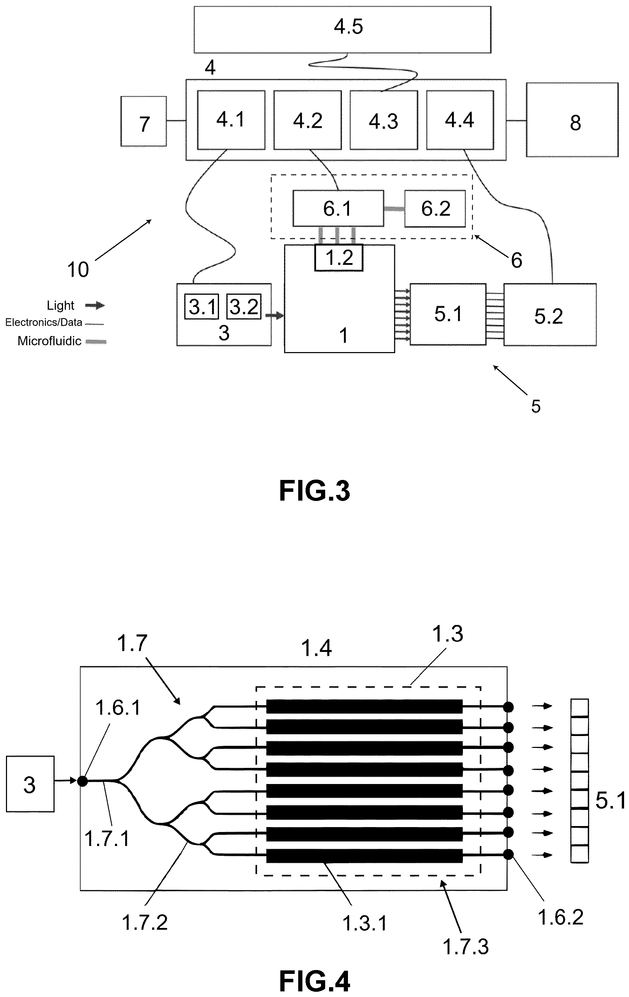

Figure 3 shows an embodiment of the claimed point-of-care detection device (10), wherein different connections between elements of said device (10) have been indicated, i.e. optical path connections, electronic communications and microfluidic connections. The device (10) comprises an illumination optics (3), the cartridge (1), a processing unit (4), and detection module (5) which in turn comprises detection optics (5.1) and detection electronics (5.2). The illumination optics (3) comprises an illumination source (3.1) and an optical arrangement (3.2). The illumination optics (3) is optically coupled with the cartridge (1).

The device (10) further comprises pumping means (6) comprising one or more pumps (6.1) and a waste reservoir (6.2).

In some embodiments, the device (10) further comprises a holder with a Peltier element to support the photonic chip (1.4). This Peltier element is configured to thermally regulate the photonic chip. An embodiment of this holder is described later in greater detail later.

The device (10) further comprises a processing unit (4) communicably coupled with the illumination optics (3) and the detection module (5). The processing unit (4) comprises a laser controller (4.1) configured to operate the illumination source (3.1), a microfluidic controller (4.2) configured to operate the pumps (6.1) of the pumping means (6), a user interface (4.3). The microfluidic controller (4.2) is responsible for delivering, in a controlled manner, the sample to the functionalized sensing regions (1.3.1) of the surface of the photonic chip (1.4). In addition, the processing unit is configured with detection algorithms (4.4) to operate on the detection electronics (5.2). In this way, the processing unit (4) comprises control electronics and software which manage the activation and intensity of the illumination source (3.1), regulates the operation of the microfluidics, stabilizes temperature-sensitive elements, and processes data received from the photodetection system. Although not displayed, the processing unit may comprise other control electronics configured such as a temperature controller configured to stabilize temperature-sensitive elements (such as the holder mentioned above). Also, the device (10) may comprise a data storage means (7) configured to save the quantitative output of the processing unit (4), as well as a wireless or cable-based communication device (8) configured to perform a data transfer to an external device. In this way, the measurements obtained by the device (10) can be stored and processed locally or transferred to another unit for subsequent analysis.

In a preferred embodiment, the detection module (5) comprises a detection optics (5.1) including a photodiode array (e.g. having 16 detection elements (5.1.1)) or a CMOS/CCD camera. Advantageously, this detection optics (5.1) is capable of high-resolution, real-time monitoring of changes in interference patterns from the sensor waveguides. The detection module (5) further comprises detection electronics (5.2) comprising an amplifier and an analog-to-digital (A/D) converter. The amplifier is configured to provide a low-noise amplification of the analogue signals (i.e. the interference pattern generated) from the photodiode array, while the A/D converter performs the conversion of the analogue signals into a digital signal recorded by the processing unit (4).

The pumping means (6) routes the samples from the sample reservoir (1.1) to the functionalized sensing regions (1.3.1) on the photonic chip (1.4) in the cartridge (1) through microfluidic microchannels of the microfluidic interface (1.3.2) that align with said functionalized sensing regions (1.3.1).

### Illumination optics (3)

The device (10) uses a narrow-bandwidth coherent illumination source (3.1), which could be a laser diode, coupled directly into the waveguides (1.7). A stable illumination source (3.1) is essential for minimizing noise and maximizing sensitivity, ensuring the reliability of the evanescent field-based detection method.

In an embodiment, the illumination source (3.1) comprises a laser diode (wavelength λ = 660 nm, maximum power Pmax = 120 mW, maximum intensity Imax = 210 mA) paired with an illumination arrangement (3.2) that in turn comprises a collimator (3.2.1), a polarizer (3.2.2), an isolator (3.2.3), and an objective lens (3.2.4) to focus the beam onto the photonic chip (1.4). A benchtop laser diode current controller, a benchtop temperature controller, and a thermoelectric-cooled mount are used to control the current, modulating it in the range from 100 to 200 mA, and to regulate the temperature of the laser diode (room temperature: 25°C) in order to optimize its performance.

### Details of the photonic chip (1.4)

The photonic chip (1.4) integrates several high refractive index (i.e. between 2-3) dielectric waveguides, each designed to maintain specific light modes within a low-index surrounding medium (i.e. 1.45 in this case). Each waveguide's sensing area is biofunctionalized to detect a distinct biomarker or analyte. In this way, the invention is based on waveguide sensors.

Figure 4 shows a preferred embodiment of the photonic chip (1.4) according to the present invention, which is integrated into the disposable cartridge (1). Said photonic chip (1.4) is illuminated by the illumination optics (3), and the light output by the photonic chip (1.4) is collected by the detection optics (5.1), which in turn comprises a light detection array. The photonic chip (1.4) comprises a plurality of photonic IO ports (1.6), in this case, a single photonic input port (1.6.1) and eight photonic output ports (1.6.2).

In an embodiment, the illumination optics comprises a coherent illumination source (3.1) with a fixed or modulated wavelength and bandwidth, such as a laser diode, configured to couple light into the waveguide array (1.7) of the photonic chip (1.4). This illumination source is chosen for stability and compatibility with interferometric sensing.

In an embodiment, the waveguide array (1.7) is in a network that comprises:
i) an input waveguide (1.7.1) optically coupled to the illumination source (3.1) and configured to receive a coherent light beam;
ii) a plurality of branching waveguides (1.7.2) arranged in successive splitting stages, each stage dividing light from a parent waveguide into two or more daughter waveguides to generate a plurality of distinct light beams;
iii) a plurality of output waveguides (1.7.3), each comprising a functionalized sensing region (1.3.1) configured to interact with an analyte, wherein the output waveguides (1.7.3) are optically coupled to the branching waveguides (1.7.2) and to the detection module (5);
wherein the functionalized sensing region (1.3.1) of each output waveguide (1.7.3) modifies the coherent light beam propagating through it by inducing a differential phase shift between the two light modes via interaction of the analyte with the evanescent field of the modes, thereby generating a modified coherent light beam characterized by altered interference patterns.

In this embodiment, the detection module (5) is configured to measure the altered interference patterns generated by the modified coherent light beams, said patterns being representative of analyte binding at the functionalized sensing regions (1.3.1).

As illustrated in Figure 4, the sensing window (1.3) may comprise one or more different functionalized sensing regions (1.3.1), each functionalized sensing region (1.3.1) being arranged at a different branching waveguide (1.7.2). The region known as the "sensing window," is functionalized with (bio)chemical receptors to be able to bind to the target analyte of the sample in the presence of the evanescent field.

In the embodiment of Figure 4, the network is a tree-like network with three splitting stages, and in each splitting stage the illumination of a waveguide is divided into two waveguides.
- Stage 1: The illumination received in the initial waveguide (1.7.1) is split into two branching waveguides (1.7.2).
- Stage 2: Each of the two branching waveguides (1.7.2) from Stage 1 further splits into two waveguides, resulting in a total of four branching waveguides (1.7.2).
- Stage 3: Each of the four waveguides from Stage 2 finally splits into two new waveguides, leading to a total of eight output waveguides (1.7.3). These output waveguides (1.7.3) are an optical output interface coupled with the photonic output ports (1.6.2). The output waveguides work as sensing waveguides for the target analyte(s).

Then, the light received in the photonic output ports (1.6.2) is collected by the detection module (5), in this case, detection optics (5.1) that comprises a photodetector array.

Thus, the photonic chip (1.4) is configured to split an input illumination into multiple outputs.

Although the embodiment of Figure 4 comprises an output optical interface with eight photonic output ports (1.6.2), this is not a limitation. In other embodiments of the device (10), the output optical interface may comprise 2N photonic output ports (1.6.2), wherein N is the value of the splitting stages.

In a non-illustrated alternative to the embodiment of Figure 4, one of the output waveguides (1.7.3) is reserved for reference. In this configuration, seven output waveguides (1.7.3) are used for sensing the target analyte(s), while the remaining one serves as a reference sensor for calibration.

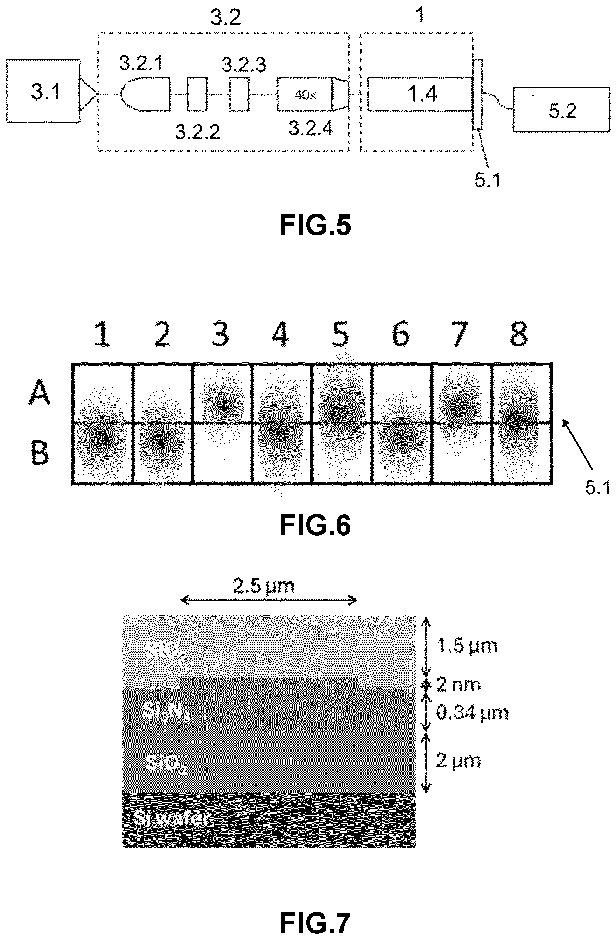

Figure 5 provides a detailed view of the optical arrangement (3.2) designed to condition and direct the light from the coherent illumination source (3.1) onto the photonic chip (1.4) for subsequent analysis. Following the path of the light emitted by the source, the arrangement (3.2) consists of the following components, placed sequentially:
- A collimator (3.2.1), for instance, a spherical lens that serves to collect and collimate the diverging light emitted from the coherent illumination source (3.1). By shaping the beam, it ensures that the light entering the subsequent optical elements has the desired properties for proper operation and efficient delivery to the photonic chip (1.4).
- A polarizer (3.2.2): The polarizer is included to define the polarization state of the light incident on the photonic chip (1.4). Controlling the polarization can be crucial for optimizing the interaction of light with the waveguide structures on the photonic chip (1.4), potentially influencing the excitation efficiency of specific modes or the sensitivity of the measurements. In a preferred embodiment, the polarizer (3.2.2) is configured to selectively transmit the TE modes.
- An isolator (3.2.3): The isolator is configured to allow light to pass in only one direction, from the illumination source (3.1) towards the photonic chip (1.4). Its primary function is to prevent any back-reflected light from the photonic chip (1.4) or subsequent optical elements from returning to the coherent illumination source (3.1). Such back reflections can destabilize the source, introduce noise into the system, or even damage the laser.
- An objective lens (3.2.4): This lens, positioned just before the light reaches the photonic chip (1.4), is responsible for focusing the conditioned and polarized light onto the specific incidence region of the photonic chip (1.4), in this case, the functionalized sensing regions (1.3.1). This focused beam facilitates efficient light coupling into the waveguides or precise illumination of the sensing regions for effective analysis.

In an embodiment, the magnification of the objective lens (3.2.4) is 40x. In this preferred embodiment, the use of a 40x objective lens provides a tightly focused beam on the photonic chip (1.4).

The sequential arrangement of these optical elements in the optical arrangement (3.2) ensures that the light from the coherent illumination source (3.1) is properly shaped, its polarization is controlled, unwanted back reflections are eliminated, and finally, it is precisely delivered to the photonic chip (1.4) for the intended analysis.

Figure 6 is a schematic indicating a 2D photodetector (e.g. photodiode) array suitable for the detection optics (5.1) of an embodiment of the device (10) having the photonic chip (1.4) according to Figure 4. In this way, the device (10) includes a customized 2D photodiode detection array to detect the changes to the interference pattern produced as analytes are detected in eight parallel waveguide sensors, as illustrated in Figure 4.

For instance, the photodetector array of Figure 6 comprises 16 detection elements (5.1.1) organized in two pairs (A and B), wherein each pair provides recording of the interference pattern from a different output waveguide (1 to 8).

### Details of the sensing process carried out by the device (10)

Upon inserting the cartridge (1), the sample is distributed across the photonic chip's waveguide functionalized sensing regions (1.3.1) using the microfluidic microchannels of the microfluidic interface (1.2).

Then, illumination is provided by the illumination optics (3). Incoming light is divided into separated functionalized sensing regions (1.3.1) via a waveguide (1.7) array on the photonic chip (1.4).

Each waveguide (1.7) is configured as a photonic interferometer, which in general supports two modes of light, with one mode more affected by the binding of the target analyte of the sample than the other mode. These two modes interfere producing intensities changes which correspond to the analyte binding and concentration. This could use an implementation such as the bimodal waveguide described in EP2017602B1 or other types of integrated photonic interferometers such as Mach Zender style interferometer.

The waveguides (1.7) sustain and guide modes of light, with evanescent tails protruding out of the high refractive index material which acts as a sensor of the local optical conditions at the waveguide surface.

The sensing window (1.3) is functionalized with (bio)chemical receptors to be able to bind to the target analyte in the presence of the evanescent field. The evanescent field, which is sensitive to local changes in refractive index, allows for label-free detection of (bio)molecules binding to the functionalized sensing region (1.3.1) surface.

In an embodiment, each functionalized sensing region (1.3.1) of the sensing window (1.3) may be functionalized with a different capture molecule to allow simultaneous detection of multiple analytes within the same sample. As analytes in the sample bind to their respective capture molecules, they induce refractive index changes in the local environment. This alters the phase difference between the two modes of the interferometric waveguide, causing a shift in the interference pattern.

After passing through the functionalized sensing regions (1.3.1), the light is directed to the detection module (5), where phase shifts induced by the binding events onto the waveguide (1.7) surface can be detected.

The detection module (5) comprises detection optics (5.1) such as photodiode pairs (or other suitable detectors) to measure changes in the interference pattern. In an embodiment, for each waveguide (1.7), a normalized signal difference between the two photodiodes in a pair (A and B, cf. Figure 6) correlates with the phase difference caused by analyte binding. This phase difference is proportional to the analyte concentration.

Finally, detection electronics (5.2) is used to provide signal amplification and digital processing such that to convert the interference pattern into quantitative data, which may be displayed on the device's user interface (4.3), for instance in a screen.

In an embodiment, the photonic chip comprises interferometric waveguides and operates by the interference of two modes of the light of the same polarization and wavelength, propagating along the waveguide. To achieve that, light is coupled into a single mode rib waveguide with controlled dimensions, where the core thickness is increased after a certain distance performing as a step junction, allowing only the propagation of the fundamental and first order modes of light. A sensing window (1.3) is etched at the top of the bimodal section (1.7.B) and (bio)receptors are attached to the waveguide surface.

Both modes then travel through the waveguide, where the sensing window is located, until reaching the output. These two modes have different velocities and penetration depths of their evanescent fields in the waveguide boundary surface, resulting in different sensitivities to refractive index changes in the sensing area. As both modes are differently affected by local changes in the refractive index taking place in the sensing area, an interference pattern is generated at the exit of the waveguide due to the interaction between both mode intensities. The interference between both guided modes is collected by a pair of detection elements (5.1.1) of the detection module (5) optically coupled with the output waveguide.

### Example of waveguide (1.7) with functionalized sensing regions (1.3.1)

In the following, a possible implementation of a waveguide with functionalized sensing regions (1.3.1) suitable for the photonic chip (1.4) of the invention is shown in Figure 7. In this embodiment, the functionalized sensing regions (1.3.1) are based on a bimodal waveguide interferometer. The design of the bimodal waveguide technology involves waveguides of micro/nanoscale, which are essential to control the electromagnetic evanescent field interacting with the molecules in the biorecognition event. Initial conditions considered for the design are illumination within the visible spectrum range, polarized illumination (i.e. TE mode) and a waveguide (1.7) comprising a silicon nitride (Si₃N4) core.

In this embodiment, the waveguides (1.7) are made of a silicon nitride (Si₃N₄) core (refractive index of 2.00 and thickness of 340 nm) on a SiO₂ buffer layer (having a refractive index of 1.46 and a thickness of 2 µm). To ensure single-mode behaviour in the longitudinal direction in the visible range, the waveguide thickness decreases to 150 nm until the step junction (1.7.C). Also, a nanometric height rib waveguide (3 µm width × 2 nm height) is defined in the step junction (1.7.C), as illustrated in Figure 7. In other embodiments, the nanometric rib has a height in the range 1-3 nm. The structure is covered by a SiO₂ cladding layer (refractive index 1.48). Finally, in the bimodal section (1.7.B), a portion of the cladding is removed defining a sensing window (1.3) area (15×0.05 mm²) where the evanescent field of the guided light mode can probe the environment (i.e. the functionalized sensing regions (1.3.1)). This embodiment has been validated in COMSOL and allows control of two modes of illumination: the fundamental mode (TE₀₀) and the first order mode (TE₁₀).

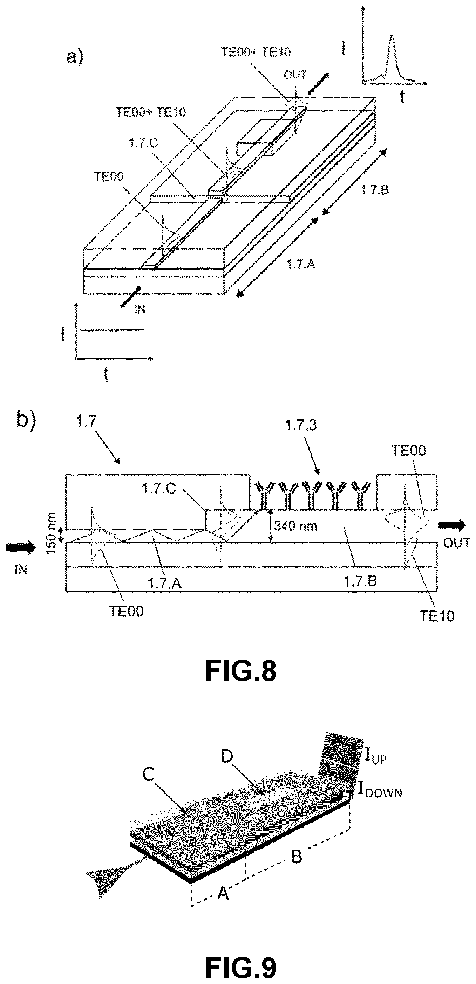

Figure 8 illustrates the evanescent field sensing principle by using the invention. Part of the light confined in a waveguide is spread out outside the core and interacts with the external medium. When the refractive index of the surface (n_{surface}) of the functionalized sensing region (1.7.3) changes due to a biointeraction (n'_{surface}), the effective refractive index of the waveguide (N_{eff}) is also modified (N'_{eff}). Figure 8a) illustrates a 3D view of the waveguide (1.7), while Figure 8b) shows a side view of the same. In this embodiment, the core thickness of the waveguide in the single-mode section is 150 nm and the core thickness of the waveguide in the bimodal section is 340 nm.

As shown in Figures 8a-b), each waveguide (1.7) comprises a single mode section (1.7.A) and a bimodal section (1.7.B). In the single mode section (1.7.A) only the fundamental mode (TE00) of incident illumination is propagated. In this example, the incident illumination intensity is uniform over time. In this way, the input light has a constant intensity (I) over time (t), indicating that the sensing mechanism relies on changes in the spatial interference pattern due to analyte binding, rather than temporal variations in the input light.

Then, the incident illumination reaches a step junction (1.7.C) which separates the single mode propagating section (1.7.A) and the bimodal section (1.7.B). This step junction (1.7.C) is crucial, as when the TE₀₀ mode from the single-mode propagating section (1.7.A) reaches the step junction (1.7.C), it encounters a change in the waveguide geometry (likely an increase in width or height). This change allows for the excitement of a higher-order mode, in this case, the first-order Transverse Electric mode (TE₁₀), in addition to the fundamental TE mode (TE₀₀). The step junction (1.7.C) acts as a mode splitter, converting a portion of the incident TE₀₀ mode into the TE₁₀ mode. The sensing window (1.3) is within the bimodal section (1.7.B).

In the bimodal section (1.7.B), two different light modes are propagated simultaneously, in this case, the TE₀₀ and TE₁₀. The interference pattern between both modes results in a change in the output intensity illumination distribution which is collected by the detection module (5). Both the TE₀₀ and TE₁₀ modes will have evanescent fields extending into the sensing window (1.3). When analyte molecules bind to the surface of this sensing window (1.3), they will perturb the local refractive index. After passing through the sensing window (1.3), the TE₀₀ and TE₁₀ modes will interfere. The accumulated relative phase shift, which is directly related to the amount of target analyte, will alter the spatial interference pattern (and thus the intensity distribution) at the output of the bimodal section (1.7.B), which is eventually collected by the detection module (5).

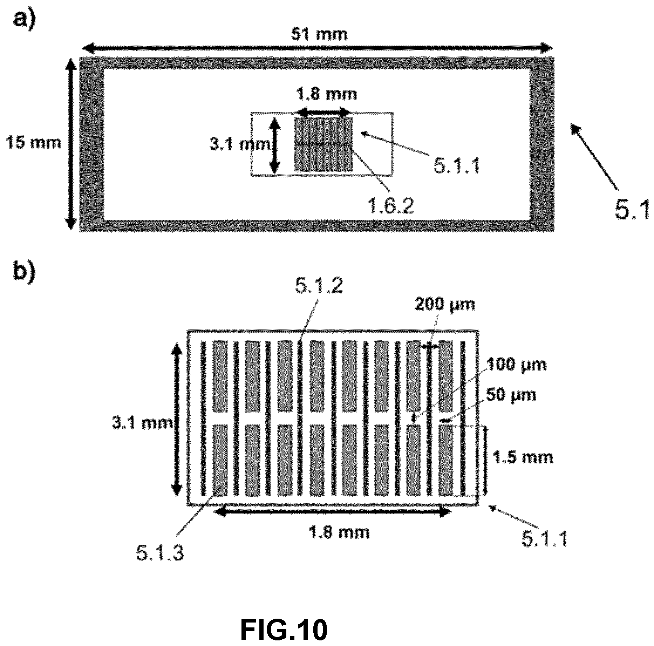

Upon a molecular recognition event of the analyte, the refractive index on the sensor surface will change, inducing a change of the effective refractive index of each mode. The TE₀₀ and TE₁₀ modes will experience a different change in their effective refractive indices due to the analyte binding. This is because their spatial field distributions (and thus the overlap with the bound analyte) are different. One mode will be more affected than the other, leading to a relative phase shift accumulating between them as they propagate through the sensing window. Since both modes have different propagation constants (thus, a different effective refractive index N_{eff}, the phase shift experienced by each mode will be different, obtaining an intensity variation at the output. In an embodiment, the phase shift produced by a variation on the refractive index of the sensing area is quantified by monitoring the output intensity distribution given by the signal S_{R}: ${S}_{R} = \frac{{I}_{up} - {I}_{down}}{{I}_{up} + {I}_{down}}$ where Iᵤₚ and I_{down} are the intensities measured in upper and lower sections (5.1.3) of each detection element (5.1.1) of the detection optics (5.1) and is usually expressed as a percentage. Upper and lower sections (5.1.3) of the detection optics (5.1) are better detailed in regard to Figure 10 later.

The signal S_{R} is related to the refractive index change occurring in the sensing area of the device by: ${S}_{R} \left(t\right) ∝ Vcos \left(Δ{φ}_{s}\left(t\right)\right)$ where SR is the phase change induced in the sensing area of the waveguides (i.e. in the functionalized sensing regions) and V is the fringe amplitude (visibility factor). The phase change (Δ*φₛ*) is related to the relative variation of the effective refractive indices of the propagating modes through: $Δ {φ}_{s} = 2 π \frac{L}{λ} \left(Δ{N}_{10}-Δ{N}_{00}\right)$ wherein N₀₀ and N₁₀ are the effective refractive indices of the fundamental and first order modes, respectively; while λ is the incident wavelength and L is the sensing area length. The effective refractive index of each mode depends on the wavelength. As described before the effective refractive index has to follow the next condition: ${n}_{clad} < {N}_{eff} < {n}_{core} ,$ thus, the effective refractive index lies between the refractive index of the cladding (*n_{clad}*) and that of the core (*n_{core}*)*.*

The quantity S_{R} is obtained from the read-out of the output intensity interference pattern: a complete oscillation of S_{R}, or fringe, corresponds to a 2π phase variation. Each analyte concentration will produce a different effective refractive index change, and, therefore, a different phase variation. By using a previous calibration curve for a set of concentrations of each analyte, an unknown concentration in a real sample can be calculated by interpolating in such calibration curve.

Figure 9 illustrates an overview of the bimodal waveguide sensor, including the single mode propagation section (1.7.A), the bimodal section (1.7.B), the step junction (1.7.C) and the sensing window (1.3). The incidence illumination may be a laser beam, and when the illumination passes through the sensing window (1.3), it expands vertically when projected on a screen. Horizontally separated intensities Iᵤₚ and I_{down} are recorded in real time.

### Mechanical arrangement

A mechanical set up is designed to ensure precise alignment of the photonic chip (1.4) with the laser beam (input light) of the illumination source (3.1) and the detection module (5) for the read-out (to obtain the output signal). The mechanical set up includes a 3-axis stage that allows for accurate positioning of the photonic chip (1.4) with 10 µm precision, and a holder that secures the photonic chip (1.4), featuring necessary bores for the microfluidics fastening. This holder also contains a slot for placing a Peltier temperature controller to ensure continuous temperature stabilization. The Peltier enables stable control of the biosensor temperature from 10 to 35 °C (the optimal biological working range) with an accuracy of 0.01°C.

### Detection module (5) details

In a preferred embodiment, the multiple interferometric signals are acquired through a customized detection optics (5.1) of the detection module (5) illustrated in Figure 10A, which comprises a photodetector array. This is a Si photodiode array with 8 detection elements (5.1.1) within an area of 1.8 x 3.1 mm, consisting of 16 individual photosensitive regions, each measuring 0.05 x 1.5 mm. Having eight detection elements (5.1.1) in the photodiode array allows the individual analysis of up to eight waveguides, each positioned at 250 µm intervals.

In this embodiment, each detection element (5.1.1) incorporates upper and lower sections (5.1.3), in this case, two distinct Si photodiodes (5.1.3) separated by a 0.1 mm gap. This design facilitates precise analysis of the modal interferometric pattern while minimizing the light intensity from the reference mode (the fundamental mode), which is positioned in the middle of the light spot. Indeed, the illumination is inputted in the detection optics (5.1) via the photonic output ports (1.6.2) of the output optical interface of the cartridge (1). In this case, eight output ports are available, each one being associated with each of the detection elements.

Figure 10B shows an enlarged view of the detection elements (5.1.1). To prevent crosstalk between adjacent waveguide outputs, the detection elements (5.1.1) are spaced 200 µm apart, with only 50 µm of active area width. Moreover, this embodiment includes dummy detection elements (5.1.2), in this case Si photodiodes, between adjacent detection elements (5.1.1) to mitigate the electronic crosstalk between different detection elements (5.1.1) and reduce noise.

Advantageously, this customized detection optics (5.1) can operate within a temperature range of -20 to 60 °C and exhibit a spectral response spanning from 340 to 1100 nm, with a central peak response wavelength of 720 nm. Specifically, the specifications of said detection optics (5.1) are shown in the table below.

| **Parameter** | **Symb ol** | **Condition** | **Min.** | **Type** | **Max.** | **Unit** |
|---|---|---|---|---|---|---|
| Photosensitivity | s | λ=λₚ | -- | 450 | -- | mA/W |
| | | A=800 nm | -- | 410 | -- | |
| Dark current | I_{D} | V_{R}=5V | -- | 10 | 100 | pA |
| Temp. Coefficient of ID | T_{CID} | -- | -- | 1.12 | -- | Times/°C |
| Terminal capacitance | Ct | V_{R}=5V, f=10kHz | -- | 5 | -- | pF |
| Short circuit current | I_{SC} | 100Ix,2856K | -- | TBD | -- | µA |
| Cut-off frequency | fc | V_{R}=5V, R_{L}=50Ω, -3dB, A=780 nm | -- | 20 | -- | MHz |
| Noise equivalent power | NEP | V_{R}=5 | -- | 4.0x10⁻¹⁵ | -- | W/Hz^{1/2} |
| | | V,λ=λₚ | | | | |

In particular, the total photodetector size is 15 mm height, 51 mm width. Still, this is not a limitation, and the size of the photodetector may be adapted in other embodiments of the invention.

### Examples of microfluidic interface (1.2) for the cartridge (1)

In an embodiment, the microfluidic interface (1.2) (or microfluidic cell) comprises a plurality of independent microchannels and is adapted for multi-microchannel individual biofunctionalization, i.e. each functionalized sensing region (1.3.1) of the waveguides (1.7) is functionalized to detect a different target (multiplexed detection). Each of the independent microchannels is associated with a different waveguide (1.7).

The microfluidic interface (1.2) is fabricated in polymer materials having biocompatible characteristics, such as: Polydimethylsiloxane (PDMS), Poly(methyl methacrylate) (PMMA), Polycarbonate (PC) and Cyclic Olefin Copolyme (COC).

In a preferred embodiment, this microfluidic interface (1.2) comprises seven independent microchannels that allow the individual immobilization of receptors in each sensor waveguide (1.7) and utilizes the rest of the photonic chip (1.4) area (covered with SiO₂) to accommodate the required microfluidic inputs and outputs of the microfluidic interface (1.2). In this embodiment, the microchannels are 100 µm height and 150 µm wide to allow individual flow in each waveguide (1.7) but without any leaks caused by pressure flow. This design provides a laminar flow and ensures a rapid delivery of the sample to the functionalized sensing region (1.3.1) of each waveguide (1.7).

In a preferred embodiment, flow rates in the interval of approx. 2-40 µL/min are employed and the pumping means (6) (particularly, the pump (6.1)) is configured to deliver the sample towards the functionalized sensing region (1.3.1) at such required flow rates.

In an embodiment, the pumping means (6) comprises one or more pumps (6.1), a waste reservoir (6.2) and other microfluidic control elements (like pistons) to control capillary forces, in order to deliver in a precise and controlled manner the sample to the functionalized sensing regions (1.3.1) of the waveguide (1.7) for its evaluation.

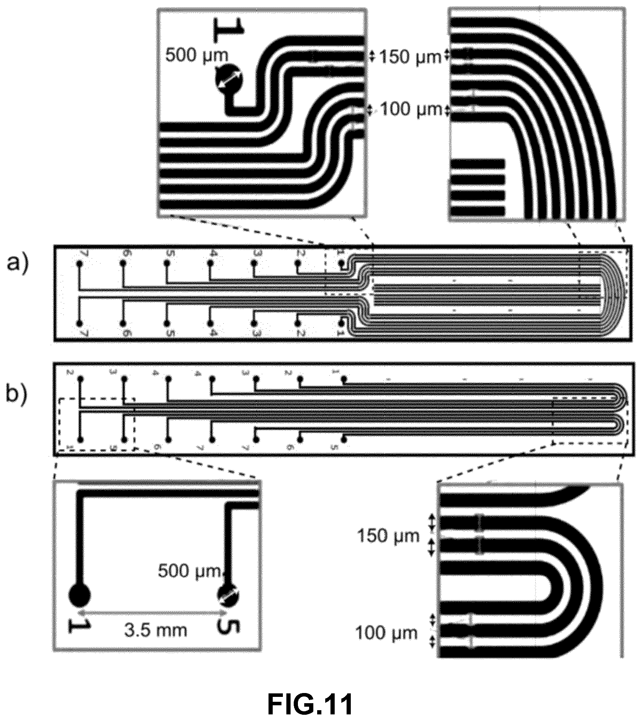

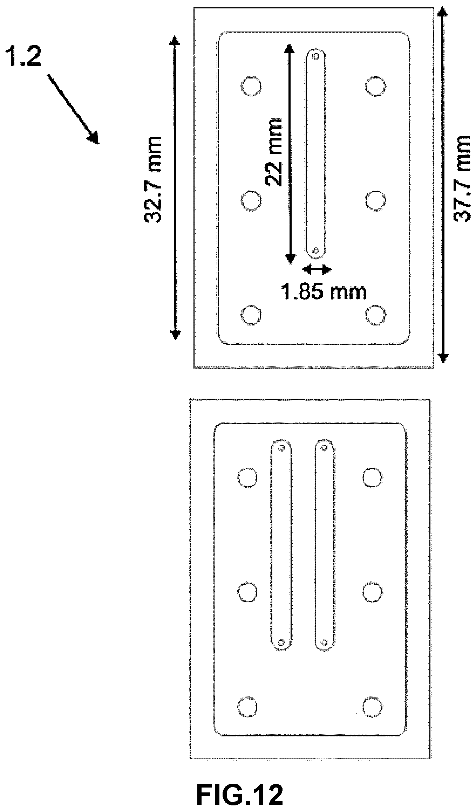

In the following, two preferred embodiments of the microfluidics interface (1.2) will be detailed, which have been designed for separated biofunctionalization processes. The first design (cf. Figure 11) facilitates the individual immobilization of various (bio)receptors on each waveguide (1.7) surface from the functionalized sensing regions (1.3.1) located in the central zone of the photonic chip (1.4), while the second design (cf. Figure 12) enables separate flow control across each waveguide (1.7) on the functionalized sensing regions (1.3.1) located in the lateral zone of the photonic chip (1.4). These microfluidic interfaces (1.2) are preferably fabricated in polymer materials (PDMS, PMMA, PC, COC, etc.) having biocompatible characteristics.

The designs of Figures 11 and 12 utilize the photonic chip (1.4) area covered by SiO₂ to accommodate the microfluidic inputs and outputs of the microfluidic interface (1.2), which are separated 3.5 mm each other to prevent leakage and minimize the risk of damage during the microfluidic interface (1.2) connection.

Regarding the embodiment of Figure 11, the microfluidic interface (1.2) comprises seven microchannels, each having 100 µm in height and 150 µm in width, ensuring individual flow through each waveguide (1.7). The microchannels are spaced 100 µm apart to match the separation of the waveguides (1.7) (250 µm). These dimensions have been optimized to facilitate proper sample diffusion across the waveguide (1.7) surface towards the functionalized sensing regions (1.3.1), preventing leakage due to pressure flow or microchannel width. The inventors have found that lower widths, up to 50 µm, could also be used but make alignment more complex. Enlarged views of certain regions of the microfluidic interface (1.2) are illustrated in Figure 11, for exemplifying a possible embodiment.

Regarding Figure 12, it shows a different single-microchannel microfluidic interface (12) that has been designed for the delivery of one sample to all the biofunctionalized waveguides (1.7) simultaneously. This may be used for the routine measurements of multianalyte samples and for analytical characterization and validation. This design involves a microfluidic system with a single microchannel wide enough, 22 mm in length and 1.85 mm in width, covering the seven sensing waveguides (1.7) included in one group. Advantageously, this design allows a single sample to interact with all the functionalized sensing regions (1.3.1) in the waveguide (1.7) array at the same time, as well as reducing the required sample volume.

The designs of Figures 11 and 12 ensure laminar flow and promote rapid delivery of the sample to the functionalized sensing regions (1.3.1). Flow rates ranging from approx. 2 to 40 µL/min can be employed. Additionally, this configuration prevents the formation of bubbles within the microchannel. For the cartridges (1) wherein sensing waveguides (1.7) are located in the lateral zone, the microfluidic interface (1.2) may include seven dummy microchannels to avoid damage of the chemical modifications of the central sensor waveguides surfaces. If required, both designs of Figures 11 and 12 may be provided with alignment marks to facilitate precise alignment with the photonic chip (1.4).

### Example of manufacturing process for the microfluidic interface (1.2)

In an embodiment, microfluidics is fabricated using soft lithography processes. The process involves creating first a master mold and then replicating the structure in a soft polymer. Briefly, the photoresist SU8-2100 is dispensed over a wafer at the optimal spin speed to achieve a 100 µm thickness. Then, a soft bake is applied for 5 min at 65°C and 25 min at 95°C to cure and dry the photoresist. After that, a direct laser photolithography is used to expose the photoresist with the designed microfluidic mask. Once the exposure is complete, a post-exposure bake is done for 5 min at 65°C and 11 min at 95°C. Finally, a development step is applied at the SU8-2100 photoresist to dissolve the non-exposed zones, leaving the multiplexed microfluidic pattern. After fabricating the mold, the PDMS replica from the mold can be assembled. First, the mold surface is made hydrophobic by silane treatment. Then the polymeric mixture consisting of the elastomer and the curing agent at a 10:1 ratio is poured into the mold. Air bubbles are removed by applying vacuum degasification for up to 30 minutes. The microfluidics is then cured for 2 hours at 80°C to ensure the cross-linking of the polymer. To reduce the high hydrophobicity of the PDMS microchannels, a mixture of polyethylene glycol (PEG200) is applied after an oxygen plasma treatment to expose the functional groups on the polymer surface.

The microfluidic interface (1.2) may also include a polymethyl methacrylate (PMMA) cover, designed to seal the PDMS with the photonic chip (1.4), avoiding any type of leakage and facilitating the distribution of solutions. This cover has two side holes for screwing and fixing to the photonic chip holder, and fourteen center holes that allow the connection between the microchannels and the input/output microfluidic tubes of the microfluidic interface (1.2). Other fabrication processes (i.e., hot embossing, thermoplastic injection molding, laser ablation, micro-milling, 3D printing...) can be also performed to get this design dimensions.

### Testing the device (10) sensitivity

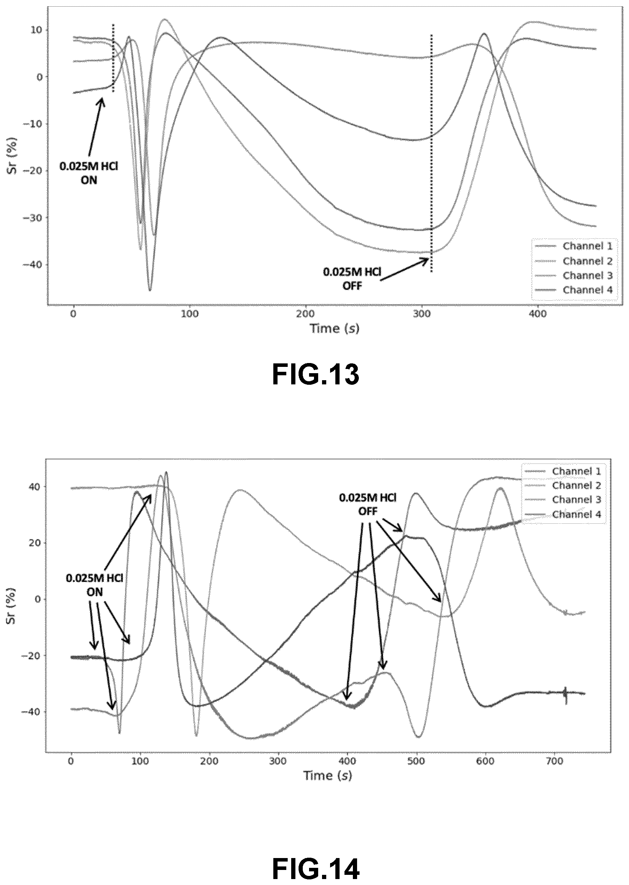

Figure 13 illustrates the interferometric signal performance of the multiplexed photonic chip (1.4) integrated with a four-microchannel microfluidic interface (1.2) (as shown in Figure 11), read out using a CCD camera. Figure 13 displays real-time sensorgrams showing refractive index changes in response to the injection of a 0.025 M HCl solution as a sample.

Unlike the microfluidic interface (1.2) with multi-channel, the single-microchannel microfluidic interface (1.2) which is displayed in Figure 12 allows simultaneous sample injection across all waveguides because they share the microfluidic interface's common flow microchannel. The measurement period is approximately 8 minutes at a flow rate of 20 µL/min provided by the pumping means (6). Figure 14 summarizes the results, presenting real-time sensorgrams of refractive index changes following a 0.025 M HCl solution injection. Similar sensorgram performance was observed with other flow rates tested (ranging from 2 to 40 µL/min), and no malfunctions were noted.

To estimate the sensing performance of the multiplex nanophotonic chip with the multi-microchannels of the microfluidics and the customized detection module (5) with a photodetector array, a sensitivity evaluation has been performed. For that, several aqueous concentrations with different refractive indices were injected through the microfluidic interface (1.2) of the claimed device (10). In particular, the embodiment of the device from Figure 4 has been tested, said device comprising eight sensing waveguides (1.7) in the waveguide array. One of the eight waveguides is reserved for reference, and the other seven waveguides are used for sensing analyte concentration.

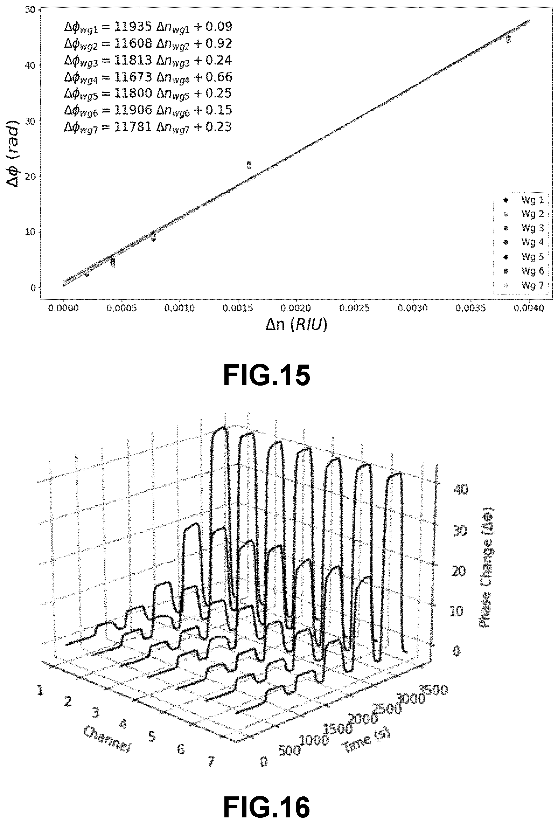

The results are summarized in Figure 15 and 16.

Figure 15 shows calibration curves for the different waveguides, where the phase shift upon target analyte binding to the functionalized sensing regions (1.3.1) of the photonic chip (1.4) is fitted to a linear curve. The slope of this fit is proportional to the local refractive index variation at the waveguide (1.7) surface. The real-time sensograms of the successive sample injections (c.f. Figure 16) show that the interferometric behaviour of the waveguides (1.7) remains stable and consistent, achieving a limit of detection (LOD) ~ (5 ± 7) × 10⁻⁷ RIU for all the seven waveguides tested.

In short, the proposed sensor device (10) is a compact and portable diagnostic platform combining interferometric evanescent field waveguide-based sensing in a novel multiplexed detection format within the cartridge (1).

## Claims

1. A point-of-care detection device (10) for quantitative target analyte identification in a sample, the sample comprising at least one analyte, the device (10) comprising:
a) a cartridge (1) comprising:
- a photonic chip (1.4) comprising a waveguide array having a plurality of waveguides (1.7), the plurality of waveguides (1.7) comprising a plurality of output waveguides (1.7.3), wherein the surface of at least one of the output waveguides (1.7.3) comprises a functionalized sensing region (1.3.1) for a selective binding of the analyte; each waveguide (1.7) being configured to support propagation of at least two light modes of a same polarization and wavelength, each light mode differently affected by analyte binding via interaction with a respective evanescent field;
- a sample reservoir (1.1) adapted to contain the sample;
- a microfluidic interface (1.2) in fluid communication with the photonic chip (1.4) and configured to route the sample from the sample reservoir (1.1) to the functionalized sensing region (1.3.1) of the waveguides (1.7); the microfluidic interface (1.2) comprising one or more microfluidic microchannels;
b) a housing (2) comprising:
- a cartridge receiving port (2.1) configured to receive the cartridge (1);
- an illumination source (3.1) configured to couple a coherent input light into the waveguides of the photonic chip (1.4) when the cartridge (1) is received in the cartridge receiving port (2.1);
- a detection module (5) comprising a plurality of detection elements (5.1) optically coupled with the plurality of output waveguides (1.7.3) of the photonic chip (1.4) and wherein the detection module (5) is configured to measure changes in interference patterns generated by the light modes propagating through the waveguide (1.7) array, said interference patterns being representative of the concentration of the analyte in the sample; and
- a processing unit (4) communicably coupled to the detection module (5), configured to analyze the interference patterns measured by the detection module (5) and to provide a quantitative output related to the presence and/or concentration of the analyte.

2. The device (10) of claim 1, wherein the illumination source (3.1) is configured to operate in the visible to near IR range; and/or wherein the device (10) comprises an optical arrangement (3.2.3) to polarize light from the illumination source (3.1) in the transverse electric (TE) mode for impingement onto the functionalized sensing region (1.3.1).

3. The device (10) of any one of claims 1 to 2, wherein the detection module (5) comprises detection optics (5.1) being selected from the group comprising a 2D photodiode array, a CMOS camera or a CCD camera; and wherein the detection module (5) is configured to detect the at least two light modes propagating through at least one waveguide (1.7) of the waveguide array.

4. The device (10) of the preceding claim wherein the detection optics (5.1) comprises a plurality of detection elements (5.1.1) being optically aligned with a respective output waveguide (1.7.3) of a waveguide (1.7); and wherein each detection element (5.1.1) comprises upper and lower sections (5.1.3) and wherein dummy detection elements (5.1.2) are disposed between adjacent detection elements (5.1.1).

5. The device (10) of the preceding claim; wherein:
• the plurality of detection elements (5.1.1) comprises eight detection elements arranged at 200-250 µm intervals, each aligned with a respective output waveguide (1.7); and
• wherein the dummy detection elements (5.1.2) comprise silicon photodiodes.

6. The device (10) of any one of claims 1 to 5, wherein the housing (2) further comprises a pumping means (6) configured to deliver the sample from the sample reservoir (1.1) to the functionalized sensing regions (1.3.1) through the microfluidic interface (1.2); and wherein the processing unit (4) comprises a microfluidic controller (4.2) configured to govern the pumping means (6) for regulating at least the flow rate of the sample towards the functionalized sensing regions (1.3.1) of the waveguide (1.7); and
wherein the microfluidic controller (4.2) is configured to regulate the flow rate of the sample delivered to the functionalized sensing regions (1.3.1) of the waveguide (1.7).

7. The device (10) of any one of claims 1 to 6, wherein the housing (2) of the device (10) comprises:
- a wireless communication module (8) configured to perform a data transfer with an external device;
- a laser controller (4.1) configured to manage the activation and intensity of the illumination source (3.1);
- a user interface (4.3) with a display, preferably a touchscreen;
- a battery configured to feed the illumination source (3.1), a temperature controller and/or the processing unit (4); and/or
- data storage means (7) configured to register the quantitative output of the processing unit.

8. The device (10) of any one of claims 1 to 7, wherein the waveguide (1.7) array is configured as a tree-like branching network that comprises:
i) an input waveguide (1.7.1) configured to be optically coupled to the illumination source (3.1), the input waveguide (1.7.1) being configured to receive the initial coherent and polarized light beam;
ii) a plurality of branching waveguides (1.7.2) optically coupled with the input waveguide (1.7.1), wherein the branching waveguides (1.7.2) are configured to divide the initial coherent and polarized light beam into a plurality of distinct coherent and polarized light beams; and wherein the plurality of branching waveguides (1.7.2) is arranged in successive splitting stages, each stage dividing light from a parent waveguide into two or more daughter waveguides, thereby generating the plurality of distinct coherent and polarized light beams;
iii) a plurality of output waveguides (1.7.3), wherein at least one of the output waveguides (1.7.3) comprises a functionalized sensing region (1.3.1) configured to interact with an analyte; wherein the output waveguides (1.7.3) are optically coupled to the branching waveguides (1.7.2) and to the detection module (5); wherein the functionalized sensing region (1.3.1) modifies the coherent and polarized light beam propagating through it by inducing a differential phase shift between the two light modes via interaction of the analyte with the evanescent field of the modes.

9. The device (10) of any one of claims 1 to 8, the waveguides (1.7) having a core and a cladding, wherein:
- the refractive index of the core of the waveguides (1.7) is in the range 2 to 3;
- the refractive index of the cladding of the waveguides (1.7) is in the range 1.4 to 1.6.

10. The device (10) according to any one of claims 1-9, wherein one of the waveguides (1.7) is a bimodal waveguide comprising:
- a single-mode section (1.7.A) configured to propagate only a fundamental traverse electric mode (TE₀₀);
- a bimodal section (1.7.B) downstream of the single-mode section (1.7.A), configured to support simultaneous propagation of the fundamental traverse electric mode (TE₀₀) and first-order traverse electric mode (TE₁₀),
- a step junction (1.7.C) separating the single-mode section (1.7.A) and the bimodal section (1.7.B); and
wherein the bimodal section (1.7.B) has a sensing window (1.3) with a length of 5-15 mm and a width of 2-5 µm.

11. The device (10) according to the preceding claim; wherein the waveguides (1.7) have a height in the range of 1-3 nm and a width of 0.5-2.5 µm.

12. The device (10) according to any one of claims 1 to 11, wherein the waveguides (1.7) have a core, the core of the waveguides (1.7) is made of Si₃N₄, and the cladding of the waveguides (1.7) is made of SiO₂; wherein the thickness of the core of the waveguides (1.7) is between 150-400 nm, and the thickness of the cladding of the waveguides (1.7) is between 1-2 µm.

13. The device (10) of any one of claims 1 to 12, wherein the microfluidic interface (1.2) is made of a biocompatible material comprising one or more of the following: PDMS, PMMA, PC, and/or COC; and/or
wherein the microfluidic interface (1.2) comprises microchannels with: a width of 50-200 µm, preferably 100-150 µm; a height of 50-150 µm, preferably 80-100 µm; a spacing of 50-250 µm between adjacent microchannels.

14. The device (10) according to any one of claims 1-13, wherein the microfluidic interface (1.2) comprises:
- A multi-channel configuration with a plurality of independent microchannels, preferably 4-8 microchannels, each microchannel being aligned with a functionalized sensing region (1.3.1), for multiplexed analyte detection; or
- A single microchannel adapted to deliver the sample collectively to all functionalized sensing regions (1.3.1).

15. A method for quantitative identification of an analyte in a sample, the method comprising the following steps:
a) providing a point-of-care detection device (10) according to any one of claims 1 to 14; wherein selective binding of the analyte to the functionalized sensing region (1.3.1) has taken place;
b) introducing a sample into the sample reservoir (1.1) of the cartridge (1) and the cartridge into the receiving port (2.1);
c) routing the sample, via the microfluidic interface (1.2), to the functionalized sensing region (1.3.1) of the waveguides (1.7);
d) illuminating the waveguides (1.7) with light from the illumination source (3.1), such that at least two light modes of a same polarization and wavelength propagate through each waveguide (1.7);
e) measuring, by means of the detection module (5), changes in interference patterns generated by the light modes propagating through the waveguide (1.7) array, the changes being indicative of the presence and/or concentration of the analyte in the sample; and
f) analysing, with the processing unit (4), the measured interference patterns to provide a quantitative output related to the presence and/or concentration of the analyte in the sample.
